# NOUVEAU FASCICULE DE BREVET EUROPEEN

(11) **EP 3 843 974 B2**
(45) Date de publication et mention de la décision concernant l'opposition: **10.12.2025**
(45) Mention de la délivrance du brevet: 28.09.2022
(21) Numéro de dépôt: 19759664.6
(22) Date de dépôt: 05.08.2019
(51) Int. Cl.: B29C 49/78, B29C 49/06, B29C 49/64, B29L 31/00

(54) **PROCEDE DE MESURE INDIVIDUELLE DE LA TEMPERATURE D'UNE PREFORME**
VERFAHREN ZUR INDIVIDUELLEN MESSUNG DER TEMPERATUR EINER VORFORM
METHOD FOR INDIVIDUAL MEASUREMENT OF THE TEMPERATURE OF A PREFORM

(30) Priorité: 28.08.2018 FR 1857710
(43) Date de publication de la demande: 07.07.2021
(73) Titulaire: Sidel Participations, 76930 Octeville-sur-Mer (FR)
(72) Inventeur: BOURVELLEC, Loïc, 76930 Octeville-sur-mer (FR); GIRARD, Yann, 76930 Octeville-sur-mer (FR)
(74) Mandataire: Sidel Group
(86) Numéro de dépôt international: PCT/FR2019/051901
(87) Numéro de publication internationale: WO 2020/043974

(56) Documents cités:
- WO-A1-2016/012704
- WO-A2-2008/154503
- DE-A1- 102015 101 769
- DE-C2- 19 749 984
- FR-A1- 2 935 924
- US-A1- 2005 146 065
- US-A1- 2014 145 375
- US-B2- 6 839 652

## Description

### DOMAINE TECHNIQUE DE L'INVENTION

L'invention concerne une installation de production de récipients par formage de préformes, notamment par étirage-soufflage, comportant un dispositif de mesure de la température des préformes.

### ARRIERE PLAN TECHNIQUE DE L'INVENTION

Il est connu de fabriquer des récipients par formage, notamment par étirage-soufflage, de préformes en matériau thermoplastique. Préalablement à l'opération de formage, les préformes sont chauffées à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison il est préférable que seul le corps de la préforme soit chauffé au-delà de la température de transition vitreuse, le col demeurant à une température inférieure à ladite température de transition vitreuse pour éviter sa déformation.

La fabrication de récipients en grande série est réalisée dans une installation de production qui comporte une station de chauffage qui permet, lors d'une étape préalable de chauffage, de rendre malléable le corps de la préforme par chauffage au-delà de la température de transition vitreuse.

L'installation de fabrication comporte aussi une station de formage qui est agencée en aval de la station de chauffage. Lors de l'étape de formage, la préforme chaude est placée dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule.

La température des préformes le long de leur trajet dans l'installation de fabrication est un paramètre essentiel qu'il est préférable de maîtriser. Par exemple si le corps d'une préforme est trop froide lors de l'opération de formage, cela peut endommager une tige d'étirage de l'unité de moulage.

Pour cette raison, il est connu d'équiper les installations de fabrication avec des capteurs de température sans contact qui permettent de mesurer à la volée la température de préformes durant leur défilement dans l'installation. De telles installations sont notamment décrites dans les documents FR2935924, DE102015101769 et WO2016/012704.

Les capteurs actuellement utilisés sont agencés de manière à mesurer la température de moyenne de plusieurs préformes en défilement. Les capteurs permettent par exemple de connaître la température moyenne de huit préformes consécutives. Lorsqu'un défaut est détecté, il n'est pas possible de savoir si plusieurs préformes sont concernées par le défaut ni de quelles préformes il s'agit. Ainsi, à chaque défaut constaté par le capteur, l'installation éjecte l'ensemble des préformes sur lesquelles la mesure moyenne défectueuse a été effectuée.

Certaines préformes présentant une température pourtant conforme aux attentes sont donc fréquemment éjectées en même temps que des préformes dont la température est défectueuse. Il en résulte une perte importante de préformes.

De plus, pour certaines applications, notamment alimentaires ou pharmaceutiques, les récipients doivent être produits dans des conditions aseptiques. A cet effet, chaque préforme doit présenter une température supérieure à un seuil déterminé, par exemple 100°C. Si ce n'est pas le cas, elle ne respecte pas les normes de fabrication et elle doit être éjectée.

Cependant le procédé de mesure actuel ne permet pas de connaître la température individuelle de chaque préforme. Ceci ne permet donc pas d'assurer un suivi optimal des préformes lorsqu'un cahier des charges doit être respecté, par exemple pour la production de récipients aseptiques.

### BREF RESUME DE L'INVENTION

L'invention propose un procédé de mesure de la température d'une préforme dans une installation de fabrication de récipients par formage de préformes en matériau thermoplastique, notamment en PET, l'installation comportant :
- un dispositif de transport des préformes déplaçant en continu les préformes en file le long d'un trajet de production ;
- une station de chauffage des préformes qui est traversée par le trajet de production ;
- un dispositif de mesure sans contact de la température d'une partie des préformes comportant un capteur qui est apte à mesurer la température des préformes en mouvement de défilement continu sur un tronçon de mesure du trajet de production ;
caractérisé en ce que le dispositif de mesure est équipé d'un dispositif optique convergent qui permet de projeter une image du capteur selon une direction de mesure dans une zone de mesure de la température des préformes avec un faisceau de mesure formant un cône convergent vers un point de focalisation, la zone de mesure étant formée par un tronçon du faisceau de mesure situé à proximité immédiate et/ou comprenant le point de focalisation et la zone de mesure présentant une section de dimensions inférieures au diamètre externe de la partie de la préforme à mesurer pour mesurer individuellement la température de la préforme.

Selon d'autres caractéristiques du procédé :
- le temps de réponse nécessaire au dispositif de mesure pour fournir une mesure de température est inférieur au temps d'exposition pendant lequel la partie à mesurer d'une préforme en défilement coupe la zone de mesure ;
- les parties à mesurer de deux préformes adjacentes sont écartés dans le sens du défilement par un intervalle de largeur supérieure aux dimensions de la section de la zone de mesure ;
- la direction de mesure est orientée en direction du tronçon de mesure en formant avec la direction de déplacement des préformes un angle tel que lorsqu'une préforme sort de la zone de mesure et avant que la préforme suivante n'entre dans la zone de mesure, la zone de mesure demeure dans l'intervalle pendant un temps supérieur ou égal au temps de réponse du dispositif de mesure ;
- la direction de mesure est orientée vers le tronçon de mesure orthogonalement à la direction de déplacement des préformes afin d'obtenir un temps maximal d'exposition à la zone de mesure de la partie à mesurer de chaque préforme ;
- les préformes défilent selon une direction rectiligne tout le long du tronçon de mesure.

L'invention concerne aussi une installation pour la mise en oeuvre du procédé réalisé selon enseignements de l'invention, comportant :
- un dispositif de transport des préformes en file le long d'un trajet de production ;
- une station de chauffage des préformes qui est traversée par le trajet de production ;
- un dispositif de mesure sans contact de la température d'une partie des préformes comportant un capteur qui est apte à mesurer la température des préformes en mouvement de défilement continu sur un tronçon de mesure du trajet de production ;
caractérisé en ce que le dispositif de mesure est équipé d'un dispositif optique convergent qui permet projeter une image du capteur selon une direction de mesure dans une zone de mesure située sur le tronçon de mesure du trajet de production avec un faisceau de mesure formant un cône convergent vers un point de focalisation, ladite zone de mesure étant formée par un tronçon du faisceau de mesure situé à proximité immédiate et/ou comprenant le point de focalisation et la zone de mesure et ladite zone de mesure présentant une section de dimensions inférieures au diamètre externe de la partie de la préforme à mesurer pour mesurer individuellement la température de chaque préforme.

Selon d'autres caractéristiques de l'invention :
- le dispositif de mesure est agencé à proximité du tronçon de mesure, la direction de mesure étant orthogonale à la direction de déplacement des préformes sur le tronçon de mesure ;
- le tronçon de mesure est agencé dans la station de chauffage ;
- le tronçon de mesure est agencé en aval et/ou en amont de la station de chauffage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de côté qui représente une préforme apte à être soumise au procédé réalisé selon les enseignements de l'invention ;
- la figure 2 est une vue de dessus qui représente schématiquement une installation de fabrication de récipients à partir de la préforme de la figure 1, l'installation comportant un dispositif de mesure de la température pour mettre en œuvre le procédé réalisé selon les enseignements de l'invention ;
- la figure 3 est une vue à plus grande échelle de dessus qui représente le dispositif de mesure agencé à proximité d'un tronçon de mesure du trajet de défilement des préformes ;
- les figures 4 à 6 représentent une préforme entrant, traversant puis sortant d'une zone de mesure de la température du dispositif de mesure ;
- la figure 7 est un diagramme représentant un signal émis par le dispositif de mesure qui est représentatif de la température mesurée en fonction du temps ;
- la figure 8 est une vue similaire à celle de la figure 3 qui représente une variante de réalisation dans laquelle la direction de mesure est inclinée par rapport à la direction de défilement des préformes ;
- la figure 9 est une vue de dessus qui représente simultanément des préformes de plusieurs diamètres passant dans la zone de mesure du dispositif de mesure.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif une orientation longitudinale "L", dirigée d'arrière en avant selon le sens de déplacement des préformes, une orientation verticale "V", dirigée de bas en haut parallèlement à l'axe principal des préformes, et une orientation transversale "T", dirigée perpendiculairement aux orientations longitudinale et transversale. Ces orientations sont indiquées par le trièdre "L,V,T" des figures.

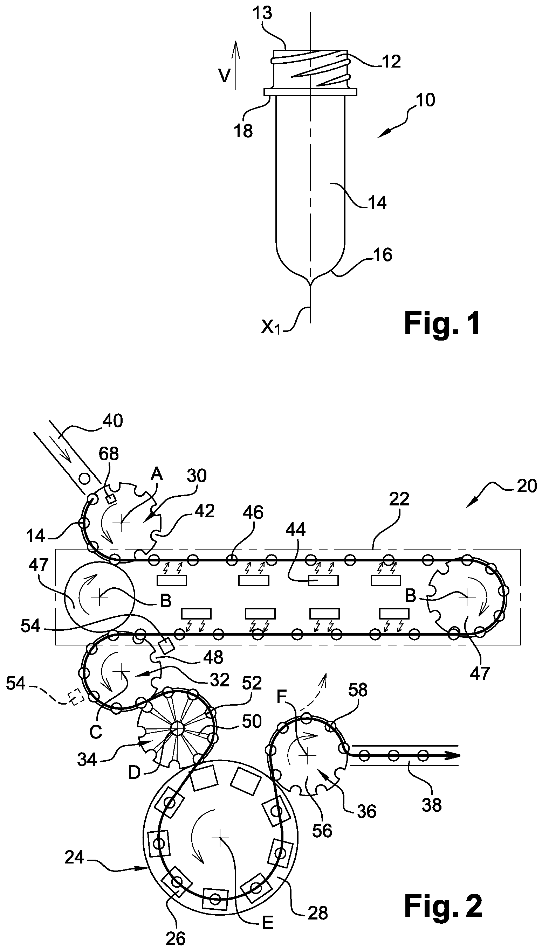

On a représenté à la figure 1 une préforme 10 réalisée en un matériau thermoplastique tel que du polyéthylène téréphtalate, plus connu sous son acronyme "PET". La préforme 10 est par exemple obtenue par moulage par injection. La préforme 10 est destinée à être transformée en un récipient final (non représenté) au cours d'un procédé de formage.

La préforme 10 présente une forme générale axisymétrique d'axe "X1" vertical. La préforme 10 comporte un col 12 supérieur présente une forme cylindrique tubulaire d'axe "X1". Le col 12 est destiné à conserver sa forme durant le procédé de formage. Le col 12 est délimité axialement vers le haut par un bord libre annulaire appelé buvant 13.

Le col 12 débouche axialement vers le bas dans un corps 14 qui présente une paroi cylindrique tubulaire dont l'axe est coaxial à l'axe "X1" principal vertical. Le corps 14 est fermé axialement vers le bas par un fond 16 de forme générale hémisphérique.

Le col 12 est déjà moulé à sa forme définitive. Il est pourvu sur sa face externe de moyens de fixation d'un bouchon, tel qu'un filetage ou une rainure. Une collerette 18 saillante radialement marque la séparation entre le corps 14 et le col 12. Par la suite, on considérera que la collerette 18 fait partie du col 12.

A la fin de leur moulage par injection, les préformes 10 sont refroidies brutalement, par exemple par trempe, pour conférer au matériau thermoplastique un état amorphe. Il est ainsi possible de rendre le matériau thermoplastique à nouveau malléable par chauffage au-delà d'une température de transition vitreuse. Le terme "malléable" signifie que la limite d'élasticité du matériau ainsi chauffé est très sensiblement inférieure à la limite d'élasticité dudit matériau présentant une température inférieure à la température de transition vitreuse.

On a représenté schématiquement à la figure 2 une installation 20 de fabrication de récipients finaux à partir d'une telle préforme 10.

L'installation 20 comporte plusieurs stations de traitement. Parmi les stations de traitement équipant couramment de telles installations 20, on a ici représenté une station 22 de chauffage et une station 24 de formage munie de plusieurs unités 26 de moulage montées à la périphérie d'un carrousel 28.

On comprendra que l'installation 20 peut comporter d'autres stations de traitement qui ne sont pas représentées ici.

Il s'agit ici d'une installation 20 de formage de récipients en continu. Les corps creux sont ainsi constamment en mouvement entre leur entrée dans l'installation 20 sous forme de préforme 10 et leur sortie sous forme de récipients final. Ceci permet d'obtenir un débit plus important de production de récipients. A cet effet, l'installation 20 comporte plusieurs dispositifs de transport des corps creux.

En variante, l'invention est applicable à une installation fonctionnant de manière séquentielle.

L'installation 20 comporte une première roue 30 de transfert en entrée de la station 22 de chauffage, une deuxième roue 32 de transfert à la sortie de la station 22 de chauffage, et une troisième roue 34 de transfert interposée entre la deuxième roue 32 de transfert et la station 24 de formage. Enfin, une quatrième roue 36 de transfert est agencée à la sortie de la station 24 de formage pour transférer les corps creux, ici les récipients finaux, vers un convoyeur 38 tel qu'un tapis ou un convoyeur à air.

Les corps creux défilent dans l'installation 20 selon un trajet de production déterminé qui est indiqué en trait gras à la figure 2.

Les corps creux arrivent, sous forme de préformes 10, successivement l'une après l'autre par une rampe 40 qui alimente la première roue 30 de transfert, formant un premier dispositif de transport des corps creux. La première roue 30 de transfert se présente à sa périphérie plusieurs encoches de support formant chacune un organe 42 de maintien d'un corps creux. Les organes 42 de maintien sont ainsi embarqués sur le disque.

La première roue 30 de transfert est montée rotative autour d'un axe "A" central vertical selon un sens antihoraire en se reportant à la figure 1. Les organes 42 de maintien se déplacent ainsi selon un circuit fermé de forme circulaire autour de l'axe "A".

Les corps creux, ici les préformes 10, sont convoyés depuis la rampe 40 jusqu'à une entrée de la station 22 de chauffage en suivant le trajet de production. Lorsqu'un corps creux a été transmis à la station 22 de chauffage, l'organe 42 de maintien poursuit son déplacement à vide le long du circuit fermé pour revenir à son point de départ et charger un corps creux suivant. Une section utile, représentée en trait gras à la figure 2, dudit circuit forme un tronçon ouvert du trajet de production.

En variante non représentée de l'invention, les organes 42 de maintien de la première roue 30 de transfert sont formés par des pinces de préhension d'un corps creux.

Puis les corps creux, toujours sous forme de préforme 10, sont convoyées à travers la station 22 de chauffage pour y être chauffés préalablement aux opérations de soufflage ou d'étirage-soufflage. A cet effet, la station 22 de chauffage est équipée de moyens 44 de chauffage, tels que des lampes halogènes ou des diodes laser, émettant un rayonnement électromagnétique pour chauffer le corps 14 des préformes 10, par exemple un rayonnement infrarouge à une puissance et sur un spectre prédéterminés qui interagit avec la matière de la préforme 10 pour la chauffer.

La station 22 de chauffage est aussi équipée de moyens de ventilation (non représentés), tels que des ventilateurs ou des dispositifs d'air pulsé aussi connus sous la dénomination anglaise "airblade". Les moyens de ventilation participent à la régulation de la température du corps creux. Les moyens de ventilation comportent des moyens de commande du débit d'air.

Le paramétrage de chaque moyen de chauffage est susceptible d'être commandée pour chauffer plus ou moins certaines portions du corps creux. Le paramétrage et notamment la position de chaque moyen de chauffage est par exemple commandée automatiquement par une unité électronique de commande (non représentée).

Chaque corps creux est porté par un mandrin rotatif, également appelée tournette, qui forme un organe 46 de maintien associé à la station 22 de chauffage. Un tel organe 46 de maintien comporte classiquement un mandrin (non représenté) qui est emmanché dans le col 12 d'une préforme 10, ainsi qu'un pignon engrenant une crémaillère fixe courant le long du trajet de production de manière à assurer une rotation sensiblement uniforme du corps creux au cours de sa chauffe.

En variante, chaque corps creux est entraîné en rotation par un moteur électrique individuel. La rotation est alors commandée par l'unité électronique de commande.

Les organes 46 de maintien sont portés par une chaîne fermée qui est entraînée dans un sens horaire par des roues 47 motrices qui sont montées rotatives autour d'axes "B" verticaux. Cette chaîne d'organes 46 de maintien mise en mouvement forme ainsi un deuxième dispositif de transport des corps creux. Chaque organe 46 de maintien est ici déplacé en continu, c'est-à-dire sans interruption, le long d'un circuit fermé. Une section utile, représentée en trait gras à la figure 1, dudit circuit forme un tronçon ouvert du trajet de production.

A la sortie de la station 22 de chauffage, les corps creux, ici les préformes 10 chaudes, sont ensuite transmis à la deuxième roue 32 de transfert qui présente une structure similaire à celle de la première roue 30 de transfert. Cette deuxième roue 32 de transfert forme un troisième dispositif de transport des corps creux.

Après la transmission du corps creux à la deuxième roue 32 de transfert, chaque organe 46 de maintien de la station 22 de chauffage poursuit son trajet à vide le long du circuit fermé pour revenir à son point de départ et charger un nouveau corps creux.

La deuxième roue 32 de transfert comporte à sa périphérie plusieurs encoches de support formant chacune un organe 48 de maintien d'un corps creux.

La deuxième roue 32 de transfert est montée rotative autour d'un axe "C" central vertical selon un sens antihoraire en se reportant à la figure 1. Les organes 48 de maintien se déplacent ainsi selon un circuit fermé de forme circulaire autour de l'axe "C".

A la sortie de la deuxième roue 32 de transfert, les corps creux, ici les préformes 10 chaudes, sont transmis à la troisième roue 34 de transfert. Cette troisième roue 34 de transfert forme un quatrième dispositif de transport des corps creux.

Ainsi, la troisième roue 34 de transfert comporte à sa la périphérie plusieurs bras 50. L'extrémité libre de chaque bras 50 est équipée d'une pince formant un organe 52 de maintien d'un corps creux. La troisième roue 34 de transfert est montée rotative autour d'un axe "D" central vertical selon un sens horaire en se reportant à la figure 2. Les organes 52 de maintien se déplacent ainsi selon un circuit fermé autour de l'axe "D".

Les bras 50 sont susceptibles de pivoter autour d'un axe vertical par rapport au moyeu ou encore de s'étendre de manière télescopique pour permettre de faire varier l'écartement entre deux corps creux.

Les corps creux sont ainsi convoyés depuis la deuxième roue 32 de transfert jusqu'à la station 24 de formage en suivant le trajet de production. Lorsqu'un corps creux a été transmis à la station 24 de formage, l'organe 52 de maintien associé poursuit son déplacement à vide le long du circuit fermé pour revenir à son point de départ et charger un nouveau corps creux. Une section utile, représentée en trait gras à la figure 2, dudit circuit forme un tronçon ouvert du trajet de production.

Lors de leur transfert à la station 24 de formage, chaque corps creux, ici sous forme de préforme 10 chaude, est inséré dans une des unités 26 de moulage de la station 24 de formage. Les unités 26 de moulage sont entraînées en mouvement continu et régulier autour de l'axe "E" vertical du carrousel 28 selon un sens antihoraire en se reportant à la figure 1. Les unités 26 de moulage se déplacent ainsi selon un circuit fermé de forme circulaire autour de l'axe "E".

Durant leur formage, les corps creux sont ainsi convoyés depuis la troisième roue 34 de transfert jusqu'à la quatrième roue 36 de transfert. Durant leur convoyage, les corps creux sont transformés en récipients finaux par des moyens de formage par étirage-soufflage qui sont bien connus et qui ne seront pas décrits plus en détails par la suite.

De manière générale, une telle installation 20 de formage est susceptible de produire des récipients finaux de formats différents. A cet effet, les unités 26 de moulage équipant la station 24 de formage sont munies de moules interchangeables. Ainsi, il est possible de modifier la forme du récipient final produit. En outre, les préformes 10 sont susceptibles de présenter des corps 14 et/ou des cols 12 de diamètre externe différent en fonction du format de récipient final à obtenir.

Il est très important de pouvoir maîtriser la température de préformes 10 le long de leur trajet afin de garantir une bonne qualité du récipient final.

A cet effet, l'installation 20 comporte au moins un dispositif 54 de mesure sans contact de la température d'une partie des préformes 10. Ladite partie des préformes 10 est par exemple formée par le corps 14 ou par le col 12.

Le dispositif 54 de mesure comporte un capteur 56 qui est apte à mesurer la température des préformes 10 en mouvement de défilement continu sur un tronçon de mesure du trajet de production. Le tronçon de mesure est ici agencé dans la station 22 de chauffage, à proximité immédiate de la sortie de la station 22 de chauffage, le long du trajet de déplacement des organes 46 de maintien, comme cela est illustré à la figure 2. Les préformes 10 défilent ainsi selon une direction longitudinale rectiligne tout le long du tronçon de mesure.

En variante de l'invention représentée en traits interrompus à la figure 2, le tronçon de mesure est agencé en aval de la station 22 de chauffage, par exemple pour mesurer la température des préformes 10 portées par la deuxième roue 32 de transfert. Dans ce cas, les préformes 10 défilent selon un tronçon de mesure présentant la forme d'un arc de cercle.

En variante non représentée de l'invention, un dispositif de mesure réalisé selon les enseignements de l'invention peut aussi être agencé en amont de la station 22 de chauffage, par exemple pour permettre de connaître la température des préformes avant leur entrée dans la station de chauffage afin d'ajuster la puissance de chauffage, notamment lorsque les préformes sont particulièrement froides.

Le capteur 56 communique l'information de température à une unité 58 électronique de commande qui permet de déterminer la température de la préforme 10. L'unité 58 électronique de commande peut alors, le cas échéant, commander l'éjection automatique d'une préforme 10 dont la température n'est pas conforme, ou encore modifier la consigne de chauffe de la station 22 de chauffage si plusieurs préformes 10 présentent une température non conforme dans un intervalle de temps déterminé.

Le dispositif 54 de mesure est équipé d'un dispositif 60 optique qui permet de projeter une image du capteur 56 selon une direction "Y" principale de mesure sur une zone 62 de mesure. La zone 62 de mesure présente une section de dimension très inférieure au diamètre externe de la partie de la préforme 10 à mesurer pour mesurer individuellement la température de la préforme 10. Ainsi, la température de chaque préforme 10 est mesurée individuellement et successivement.

Le dispositif 60 optique est ici un dispositif optique convergent, tel qu'une lentille convergente ou un instrument optique, qui crée un faisceau 63 de mesure formant globalement un cône convergent vers un point 64 de focalisation. La zone 62 de mesure est formée par un tronçon du faisceau 63 de mesure situé à proximité immédiate et/ou comprenant le point 64 de focalisation de manière à présenter une section très réduite.

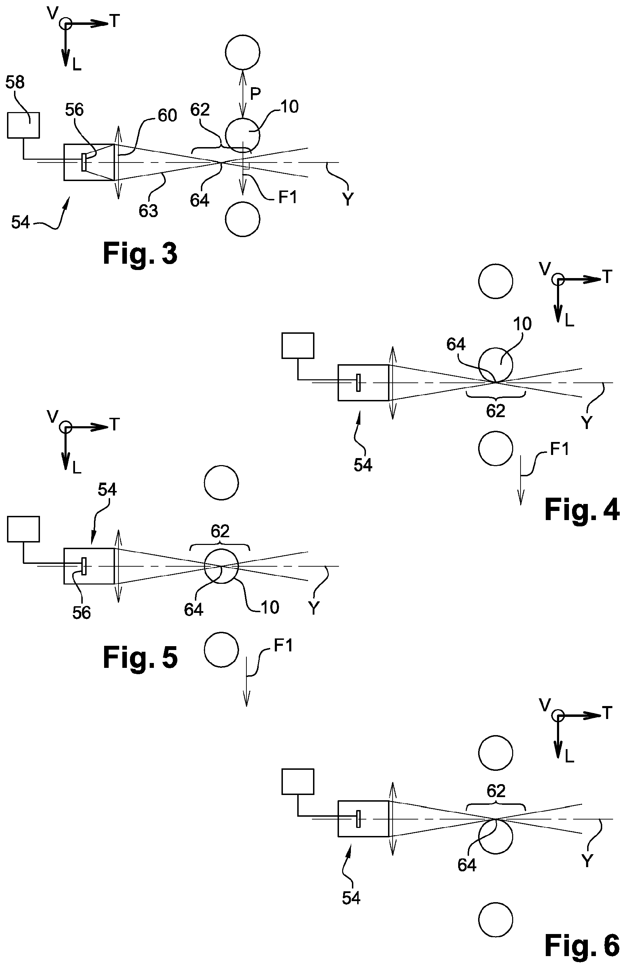

Comme représenté aux figures 3 à 6, les préformes 10 se déplacent en file dans une direction longitudinale indiquée par la flèche "F1".

La direction "Y" de mesure est ici orientée vers le tronçon de mesure orthogonalement à la direction de déplacement des préformes 10, c'est-à-dire transversalement.

Lorsqu'une préforme 10 coupe le faisceau 63 de mesure au niveau de la zone 62 de mesure, comme représenté à la figure 4, le capteur 56 commence à mesurer la température de la préforme 10. La préforme 10 poursuit son trajet en continuant à couper le faisceau 63 de mesure au niveau de la zone 62 de mesure comme indiqué à la figure 5, jusqu'à sa sortie du faisceau 63 de mesure.

Comme on peut le constater, du fait de la forme circulaire du contour de la section de la préforme 10, la mesure ne peut pas être effectuée au même point du faisceau 63 de mesure en permanence. En effet, le capteur 56 de température est fixe par rapport au châssis de l'installation 20. Cependant, la partie de préforme à mesurer demeure dans une zone 62 de mesure dont n'importe quelle section présente des dimensions inférieures au diamètre externe de la partie de préforme 10 à mesurer.

Par ailleurs, la dimension de la section de la zone 62 de mesure est suffisamment faible pour que le dispositif 54 de mesure puisse effectuer des mesures sur une seule préforme 10 à la fois pendant sa circulation le long du trajet de production.

Pour la suite de la description et pour les revendications, on définit le temps d'exposition d'une préforme 10 au capteur 56 comme étant la durée pendant laquelle la préforme 10 coupe le faisceau 63 de mesure. Bien entendu, en maximisant le temps d'exposition de la préforme 10, il est possible d'obtenir la meilleure mesure de température possible. A cet effet, le temps d'exposition maximal est obtenu pour une direction "Y" de mesure orthogonalement agencée au sens de défilement des préformes 10, comme représenté aux figures 3 à 6.

Bien entendu, le temps de réponse nécessaire au dispositif 54 de mesure pour fournir une mesure de température est inférieur au temps d'exposition pendant lequel le corps d'une préforme en défilement passe devant la zone de mesure. En maximisant le temps d'exposition des préformes 10, il est possible de réaliser une mesure même pour des vitesses de défilement élevées.

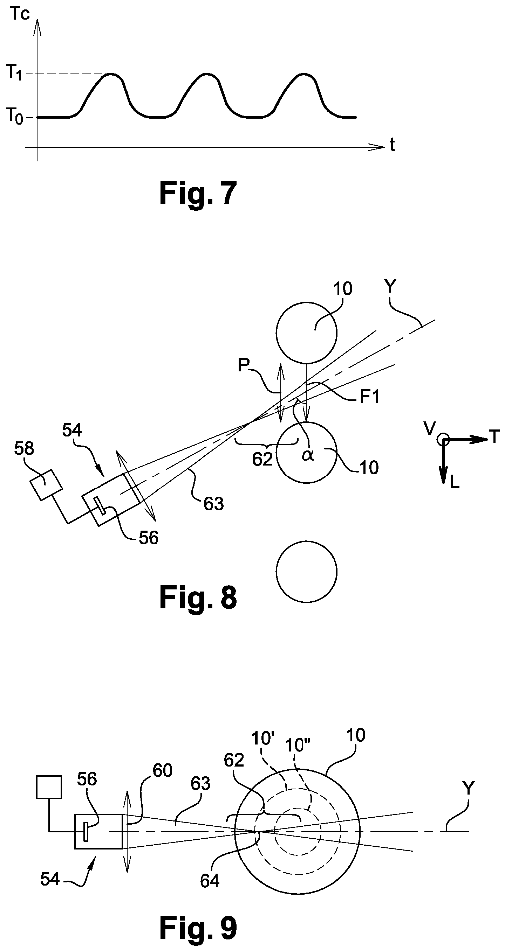

Les parties à mesurer de deux préformes 10 adjacentes sont écartés dans le sens du défilement, c'est-à-dire longitudinalement, par un intervalle "P" de largeur supérieure aux dimensions de la zone 62 de mesure. Ainsi, entre deux préformes 10, le capteur 56 de température, qui fonctionne en continue, mesure la température de l'air ambiant. Cette température ambiante forme une température de référence. Ceci permet de simplifier l'analyse des résultats de mesure. En effet, en se reportant à la figure 7, le capteur 56 de température émet un signal représentatif de la température mesurée en fonction du temps. Le signal présente des pics, qui correspondent à la mesure de la température "T1" de la préforme 10, et des creux qui correspondent à la température "T0" de référence. Il est donc aisé d'identifier la température de deux préformes 10 successives sur ce signal.

En variante représentée à la figure 8, la direction "Y" de mesure peut être orientée en direction des préformes 10 en formant avec la direction de déplacement des préformes un angle "a" différent de 90°. Cet angle "a" est sélectionné de manière à procurer un temps d'exposition de chaque préforme 10 suffisant pour que le capteur 56 puisse effectuer une mesure de la température de chaque préforme 10.

De plus, cet angle "a" est choisi de tel sorte que, lorsqu'une préforme 10 sort de la zone 62 de mesure et avant que la préforme 10 suivante n'entre dans la zone 62 de mesure, la zone 62 de mesure demeure dans l'intervalle "P", comme indiqué à la figure 8, pendant un temps supérieur ou égal au temps de réponse du dispositif 54 de mesure.

Comme représenté à la figure 9, le point 64 de focalisation est agencé de telle manière que la zone 62 de mesure puisse être adaptée à différents diamètres de préformes 10, 10', 10" sans qu'il ne soit nécessaire de bouger le dispositif 54 de mesure.

L'invention permet ainsi d'obtenir la température de chaque préforme 10 de manière individuelle. Ceci permet ainsi de garantir qu'une préforme 10 peut être détectée de manière individuelle.

## Revendications

1. Procédé de mesure de la température d'une préforme (10) dans une installation (20) de fabrication de récipients par formage de préformes (10) en matériau thermoplastique, notamment en PET, l'installation (20) comportant :
- un dispositif (46) de transport des préformes (10) déplaçant en continu les préformes (10) en file le long d'un trajet de production ;
- une station (22) de chauffage des préformes (10) qui est traversée par le trajet de production ;
- un dispositif (54) de mesure sans contact de la température d'une partie des préformes (10) comportant un capteur (56) qui est apte à mesurer la température des préformes (10) en mouvement de défilement continu sur un tronçon de mesure du trajet de production ;
**caractérisé en ce que** le dispositif (54) de mesure est équipé d'un dispositif (60) optique convergent qui permet de projeter une image du capteur (56) selon une direction (Y) de mesure dans une zone (62) de mesure de la température des préformes (10) avec un faisceau (63) de mesure formant un cône convergent vers un point (64) de focalisation, la zone (62) de mesure étant formée par un tronçon du faisceau (63) de mesure situé à proximité immédiate et/ou comprenant le point (64) de focalisation et la zone (62) de mesure présentant une section de dimensions inférieures au diamètre externe de la partie de la préforme (10) à mesurer pour mesurer individuellement la température de chaque préforme (10).

2. Procédé selon la revendication précédente, **caractérisé en ce que** le temps de réponse nécessaire au dispositif (54) de mesure pour fournir une mesure de température est inférieur au temps d'exposition pendant lequel la partie à mesurer d'une préforme (10) en défilement coupe la zone (62) de mesure.

3. Procédé selon l'une quelconque des revendications précédentes, **caractérisé en ce que** les parties à mesurer de deux préformes (10) adjacentes sont écartés dans le sens du défilement par un intervalle (P) de largeur supérieure aux dimensions de la section de la zone (62) de mesure.

4. Procédé selon la revendication précédente, **caractérisé en ce que** la direction (Y) de mesure est orientée en direction du tronçon de mesure en formant avec la direction de déplacement des préformes un angle (α) tel que lorsqu'une préforme (10) sort de la zone (62) de mesure et avant que la préforme (10) suivante n'entre dans la zone de mesure, la zone (62) de mesure demeure dans l'intervalle (P) pendant un temps supérieur ou égal au temps de réponse du dispositif (54) de mesure.

5. Procédé selon la revendication précédente, **caractérisé en ce que** la direction (Y) de mesure est orientée vers le tronçon de mesure orthogonalement à la direction de déplacement des préformes (10) afin d'obtenir un temps maximal d'exposition à la zone (62) de mesure de la partie à mesurer de chaque préforme (10).

6. Procédé selon l'une quelconque des revendications précédentes, **caractérisé en ce que** les préformes (10) défilent selon une direction rectiligne tout le long du tronçon de mesure.

7. Installation (20) pour la mise en œuvre du procédé selon l'une quelconque des revendications précédentes, comportant :
- un dispositif (46) de transport des préformes (10) en file le long d'un trajet de production ;
- une station (22) de chauffage des préformes (10) qui est traversée par le trajet de production ;
- un dispositif (54) de mesure sans contact de la température d'une partie des préformes (10) comportant un capteur (56) qui est apte à mesurer la température des préformes (10) en mouvement de défilement continu sur un tronçon de mesure du trajet de production ;
**caractérisé en ce que** le dispositif (54) de mesure est équipé d'un dispositif (60) optique convergent qui permet de projeter une image du capteur selon une direction (Y) de mesure dans une zone (62) de mesure située sur le tronçon de mesure du trajet de production avec un faisceau (63) de mesure formant un cône convergent vers un point (64) de focalisation, ladite zone (62) de mesure étant formée par un tronçon du faisceau (63) de mesure situé à proximité immédiate et/ou comprenant le point (64) de focalisation et la zone (62) de mesure et ladite zone (62) de mesure présentant une section de dimensions inférieures au diamètre externe de la partie de la préforme (10) à mesurer pour mesurer individuellement la température de chaque préforme (10).

8. Installation (20) selon la revendication précédente pour la mise en œuvre du procédé selon la revendication **caractérisé en ce que** le dispositif (54) de mesure est agencé à proximité du tronçon de mesure, la direction de mesure étant orthogonale à la direction de déplacement des préformes (10) sur le tronçon de mesure.

9. Installation (20) selon l'une quelconque des revendications 7 ou 8, **caractérisé en ce que** le tronçon de mesure est agencé dans la station (22) de chauffage.

10. Installation selon l'une quelconque des revendications 7 ou 8, **caractérisé en ce que** le tronçon de mesure est agencé en aval et/ou en amont de la station (22) de chauffage.

## Patentansprüche

1. Verfahren zur Messung der Temperatur eines Vorformlings (10) in einer Anlage (20) zur Herstellung von Behältern durch Formung von Vorformlingen (10) aus thermoplastischem Material, insbesondere aus PET, wobei die Anlage (20) Folgendes aufweist:
- eine Vorrichtung (46) zum Transport der Vorformlinge (10), die die Vorformlinge (10) kontinuierlich in einer Reihe entlang einer Produktionsstrecke bewegt;
- eine Station (22) zur Erhitzung der Vorformlinge (10), durch die die Produktionsstrecke verläuft;
- eine Vorrichtung (54) zur kontaktlosen Messung der Temperatur eines Abschnitts der Vorformlinge (10), die einen Sensor (56) aufweist, der geeignet ist, die Temperatur der Vorformlinge (10), die sich in kontinuierlicher Durchlaufbewegung befinden, auf einem Messabschnitt der Produktionsstrecke zu messen;
**dadurch gekennzeichnet, dass** die Messvorrichtung (54) mit einer konvergierenden optischen Vorrichtung (60) ausgerüstet ist, mit der ein Bild des Sensors (56) in einer Messrichtung (Y) in einen Bereich (62) zur Messung der Temperatur der Vorformlinge (10) mit einem Messstrahl (63) projiziert werden kann, der einen zu einem Fokussierungspunkt (64) hin konvergierenden Kegel bildet, wobei der Messbereich (62) durch einen Abschnitt des Messstrahls (63) gebildet wird, der in unmittelbarer Nähe gelegen ist und/oder den Fokussierungspunkt (64) umfasst, und wobei der Messbereich (62) einen Querschnitt mit Abmessungen kleiner als der Außendurchmesser des zu messenden Teils des Vorformlings (10) aufweist, um die Temperatur jedes Vorformlings (10) einzeln zu messen.

2. Verfahren nach dem vorhergehenden Anspruch, **dadurch gekennzeichnet, dass** die Reaktionszeit, die die Messvorrichtung (54) benötigt, um eine Temperaturmessung bereitzustellen, niedriger als die Expositionszeit ist, während welcher der zu messende Abschnitt eines durchlaufenden Vorformlings (10) den Messbereich (62) schneidet.

3. Verfahren nach einem der vorhergehenden Ansprüche, **dadurch gekennzeichnet, dass** die zu messenden Abschnitte zweier benachbarter Vorformlinge (10) in Durchlaufrichtung um ein Intervall (P) mit einer Breite beabstandet sind, die größer als die Abmessungen des Querschnitts des Messbereichs (62) ist.

4. Verfahren nach dem vorhergehenden Anspruch, **dadurch gekennzeichnet, dass** die Messrichtung (Y) in Richtung des Messabschnitts orientiert ist, wobei sie mit der Fortbewegungsrichtung der Vorformlinge einen Winkel (α) bildet, so dass, wenn ein Vorformling (10) aus dem Messbereich (62) austritt und bevor der folgende Vorformling (10) in den Messbereich eintritt, der Messbereich (62) während einer Zeit im Intervall (P) bleibt, die größer als oder gleich der Reaktionszeit der Messvorrichtung (54) ist.

5. Verfahren nach dem vorhergehenden Anspruch, **dadurch gekennzeichnet, dass** die Messrichtung (Y) zum Messabschnitt orthogonal zur Fortbewegungsrichtung der Vorformlinge (10) orientiert ist, um eine maximale Zeit zu erzielen, während welcher der zu messende Abschnitt jedes Vorformlings (10) dem Messbereich (62) exponiert ist.

6. Verfahren nach einem der vorhergehenden Ansprüche, **dadurch gekennzeichnet, dass** die Vorformlinge (10) in einer geradlinigen Richtung entlang dem gesamten Messabschnitt laufen.

7. Anlage (20) zur Umsetzung des Verfahrens nach einem der vorhergehenden Ansprüche, aufweisend:
- eine Vorrichtung (46) zum Transport der Vorformlinge (10) in einer Reihe entlang einer Produktionsstrecke;
- eine Station (22) zur Erhitzung der Vorformlinge (10), durch die die Produktionsstrecke verläuft;
- eine Vorrichtung (54) zur kontaktlosen Messung der Temperatur eines Abschnitts der Vorformlinge (10), die einen Sensor (56) aufweist, der geeignet ist, die Temperatur der Vorformlinge (10), die sich in kontinuierlicher Durchlaufbewegung befinden, auf einem Messabschnitt der Produktionsstrecke zu messen;
**dadurch gekennzeichnet, dass** die Messvorrichtung (54) mit einer konvergierenden optischen Vorrichtung (60) ausgerüstet ist, mit der ein Bild des Sensors in einer Messrichtung (Y) in einen Messbereich (62), der auf dem Messabschnitt der Produktionsstrecke gelegen ist, mit einem Messstrahl (63) projiziert werden kann, der einen zu einem Fokussierungspunkt (64) hin konvergierenden Kegel bildet, wobei der Messbereich (62) durch einen Abschnitt des Messstrahls (63) gebildet wird, der in unmittelbarer Nähe gelegen ist und/oder den Fokussierungspunkt (64) und den Messbereich (62) umfasst, und wobei der Messbereich (62) einen Querschnitt mit Abmessungen kleiner als der Außendurchmesser des zu messenden Teils des Vorformlings (10) aufweist, um die Temperatur jedes Vorformlings (10) einzeln zu messen.

8. Anlage (20) nach dem vorhergehenden Anspruch zur Implementierung des Verfahrens nach Anspruch **dadurch gekennzeichnet**, das die Messvorrichtung (54) in der Nähe des Messabschnitts angeordnet ist, wobei die Messrichtung orthogonal zur Fortbewegungsrichtung der Vorformlinge (10) auf dem Messabschnitt verläuft.

9. Anlage (20) nach einem der Ansprüche 7 oder 8, **dadurch gekennzeichnet, dass** der Messabschnitt in der Erhitzungsstation (22) angeordnet ist.

10. Anlage nach einem der Ansprüche 7 oder 8, **dadurch gekennzeichnet, dass** der Messabschnitt stromab und/oder stromauf der Erhitzungsstation (22) angeordnet ist.

## Claims

1. Method for measuring the temperature of a preform (10) in an installation (20) for manufacturing containers by forming preforms (10) made of thermoplastic material, notably PET, the installation (20) comprising:
- a device (46) for conveying the preforms (10) that moves the preforms (10) continuously in a line along a production path;
- a station (22) for heating the preforms (10) which is passed through by the production path;
- a device (54) for contactlessly measuring the temperature of a part of the preforms (10) comprising a sensor (56) which is capable of measuring the temperature of the preforms (10) running continuously over a measurement section of the production path;
**characterized in that** the measurement device (54) is equipped with a convergent optical device (60) which allows an image of the sensor (56) to be projected in a measurement direction (Y) in a zone (62) for measuring the temperature of the preforms (10) with a measurement beam (63) forming a cone convergent on a focal point (64), the measurement zone (62) being formed by a section of the measurement beam (63) located in immediate proximity to and/or comprising the focal point (64) and the measurement zone (62) having a section of dimensions smaller than the outer diameter of the part of the preform (10) to be measured in order to individually measure the temperature of each preform (10).

2. Method according to the preceding claim, **characterized in that** the response time needed for the measurement device (54) to supply a temperature measurement is less than the exposure time during which the part to be measured of a running preform (10) cuts the measurement zone (62).

3. Method according to either one of the preceding claims, **characterized in that** the parts to be measured of two adjacent preforms (10) are separated in the running direction by an interval (P) of a width greater than the dimensions of the section of the measurement zone (62).

4. Method according to the preceding claim, **characterized in that** the measurement direction (Y) is oriented toward the measurement section by forming, with the direction of movement of the preforms, an angle (α) such that when a preform (10) leaves the measurement zone (62) and before the next preform (10) enters into the measurement zone, the measurement zone (62) remains within the interval (P) for a time greater than or equal to the response time of the measurement device (54).

5. Method according to the preceding claim, **characterized in that** the measurement direction (Y) is oriented toward the measurement section orthogonally to the direction of movement of the preforms (10) in order to obtain a maximum exposure time in the measurement zone (62) of the part to be measured of each preform (10).

6. Method according to any one of the preceding claims, **characterized in that** the preforms (10) run in a rectilinear direction all along the measurement section.

7. Installation (20) for implementing the method according to any one of the preceding claims, comprising:
- a device (46) for conveying the preforms (10) in a line along a production path;
- a station (22) for heating the preforms (10) which is passed through by the production path;
- a device (54) for contactlessly measuring the temperature of a part of the preforms (10) comprising a sensor (56) which is capable of measuring the temperature of the preforms (10) running continuously over a measurement section of the production path;
**characterized in that** the measurement device (54) is equipped with a convergent optical device (60) which allows an image of the sensor to be projected in a measurement direction (Y) in a measurement zone (62) that is located in the measurement section of the production path with a measurement beam (63) forming a cone convergent on a focal point (64) and that is formed by a section of the measurement beam (63) located in immediate proximity to and/or comprising the focal point (64) and the measurement zone (62) and said measurement zone (62) having a section of dimensions smaller than the outer diameter of the part of the preform (10) to be measured in order to individually measure the temperature of each preform (10).

8. Installation (20) according to the preceding claim, for implementing the method according to claim **characterized in that** the measurement device (54) is arranged in proximity to the measurement section, the measurement direction being orthogonal to the direction of movement of the preforms (10) over the measurement section.

9. Installation (20) according to either one of Claims 7 and 8, **characterized in that** the measurement section is arranged in the heating station (22).

10. Installation according to either one of Claims 7 and 8, **characterized in that** the measurement section is arranged downstream and/or upstream of the heating station (22).
